# EUROPEAN PATENT APPLICATION

(11) **EP 2 138 877 A2**
(43) Date of publication of application: **30.12.2009**
(21) Application number: 09154982.4
(22) Date of filing: 12.03.2009
(51) Int. Cl.: G02B 6/293

(54) **Optical module and dispersion compensator**

(30) Priority: 24.06.2008 JP 2008164554
(71) Applicant: Fujitsu Limited, Kawasaki-shi, Kanagawa 211-8588 (JP)
(72) Inventor: Izumi, Hirotomo, Kanagawa 211-8588 (JP)
(74) Representative: HOFFMANN EITLE

(57) **Abstract**

In an optical module, a lens collects input light to generate a collected beam. A VIPA plate includes a reflective surface for highly reflecting light and a transmissive surface on which a reflection film having a lower reflectivity than the reflective surface is deposited. The VIPA plate causes multiple reflection of the collected beam within an internal area between the reflective surface and the transmissive surface, and emits diffracted light via the transmissive surface. A reflection mirror reflects outgoing light emitted from the transmissive surface to generate return light which returns to the transmissive surface. The reflection film includes a high-reflection film deposited on a portion from which the outgoing light of a high light intensity is emitted and a low-reflection film deposited on a portion from which the outgoing light having a lower light intensity is emitted.

## Description

### FIELD

The embodiment discussed herein is related to an optical module and a dispersion compensator.

### BACKGROUND

As a technique for performing high-speed and large-capacity light transmission, there have been widely used the WDM (Wavelength Division Multiplex) system in which lights having different wavelengths are multiplexed, and a plurality of signals are simultaneously transmitted through a single optical fiber.

The speed of transmission by the optical fiber differs according to the light wavelengths. For this reason, as transmission distance increases, wavelength dispersion occurs to make each optical pulse waveform dull. The wavelength dispersion is defined by propagation time difference (ps/nm/km) that occurs when two monochromatic lights different in wavelength by 1 nm are caused to propagate for one km through the optical fiber.

When pulse spreading occurs due to wavelength dispersion in the WDM system that realizes large-capacity and long-distance light transmission, a reception level is markedly degraded, which adversely affects the system. For this reason, it is necessary to perform dispersion compensation for equivalently nullifying (cancelling out) the wavelength dispersion, to thereby suppress dispersion that occurred during light transmission. In recent years, as an apparatus for performing dispersion compensation, a dispersion compensator that uses an optical component called the VIPA (Virtually Imaged Phased Array) has drawn attention.

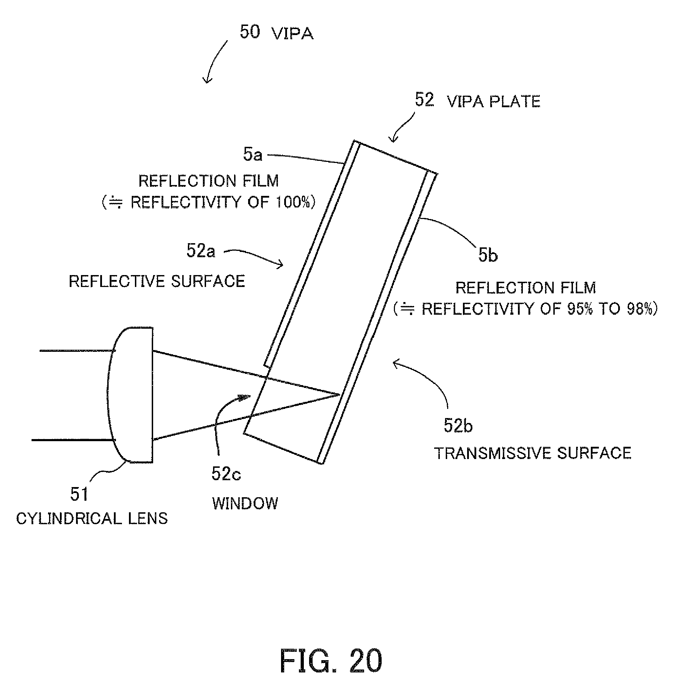

The VIPA is a device that has a wavelength division element (VIPA plate) formed by a glass plate having opposite surfaces coated with respective high-reflectivity films. By inputting a collected beam into the VIPA plate and subjecting the collected beam to multiple reflection within the glass plate, it is possible to carry out wavelength division without using a general diffraction grating. Hereafter, the basic concept of the VIPA will be described with reference to FIGS. 20 to 23.

FIG. 20 is a view of the basic construction of the VIPA. The VIPA 50 comprises a cylindrical lens (line focus lens) 51 and a VIPA plate (etalon) 52.

The cylindrical lens 51 collects input light. The VIPA plate 52 is a glass plate having a reflective surface 52a coated with a reflection film 5a having a reflectivity of 100% (or close to 100%), a transmissive surface 52b coated with a reflection film 5b having a reflectivity of approximately 95% to 98%, and a window (light incident window) 52c.

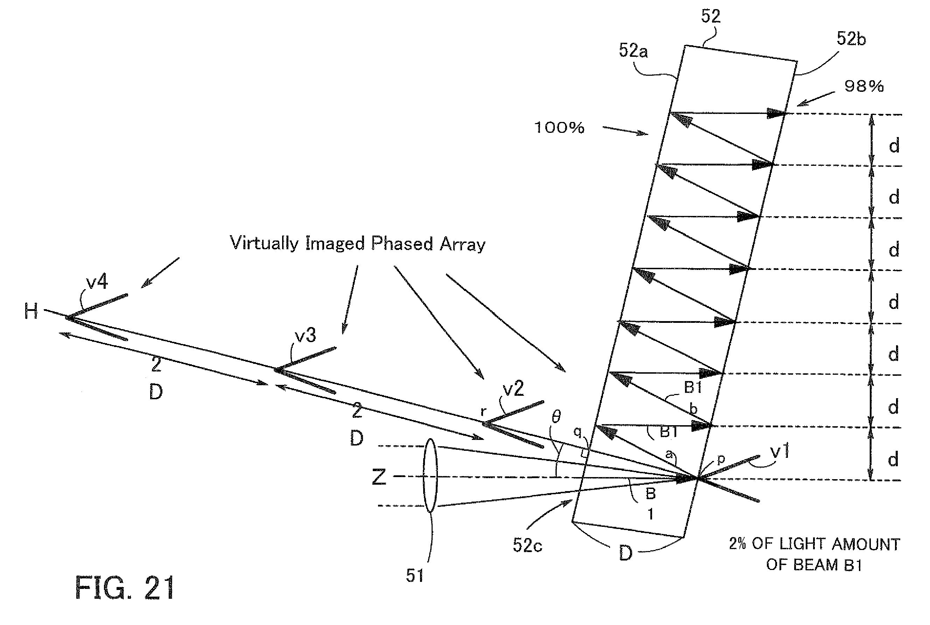

FIG. 21 is a view useful in explaining the outline of the operation of the VIPA 50. A beam B1 formed by collecting light by the cylindrical lens 51 enters the VIPA plate 52 via the window 52c. At this time, an optical axis Z of the beam B1 has a small angle θ of inclination with respect to a normal H to the VIPA plate 52.

Assuming that the reflective surface 52a has a reflectivity of 100% and the transmissive surface 52b has a reflectivity of 98%, 2% of the beam B1 is emitted out from the transmissive surface 52b with a beam diameter corresponding to the thickness of the glass plate (the beam emitted from the transmissive surface 52b is a round beam (collimated light beam) with a small expansion angle, and has a beam diameter dependent on the thickness of the glass plate). The remaining 98% of the beam B1, i.e. a beam B1a is reflected toward the reflective surface 52a (the beam B1a travels toward the reflective surface 52a while expanding within the glass plate to a small degree dependent on the thickness of the glass plate).

Further, since the reflective surface 52a has a reflectivity of 100%, the beam B1a is totally reflected therefrom toward the transmissive surface 52b (the beam B1a travels toward the transmissive surface 52b while expanding within the glass plate to a small degree dependent on the thickness of the glass plate). Then, 2% of the beam B1a is emitted out from the transmissive surface 52b with a beam diameter dependent on the thickness of the glass plate. At this time, the position of a spot from which the beam B1 is emitted and a spot from which the beam B1a is emitted is displaced by a distance d.

Similarly, the remaining 98% of the beam B1a i.e. a beam B1b is reflected toward the reflective surface 52a. These operations are repeatedly carried out, whereby the beam incident on the VIPA plate 52 via the cylindrical lens 51 undergoes multiple reflection while expanding to a small degree within the VIPA plate 52, and small amounts of beams are sequentially emitted from the transmissive surface 52b at fixed spacing intervals of the distance d.

The beams emitted from the transmissive surface 52b at the fixed spacing intervals of the distance d can be regarded as beams emitted from virtual emission spots v1 to vn (up to v4 are illustrated in FIG. 21) arranged in an array of steps (from which comes the name of the VIPA (Virtually Imaged Phased Array). This behavior can be regarded as that of an echelon (step-like) diffraction grating, and therefore the VIPA emits split light beams.

Assuming that the glass plate of the VIPA plate 52 has a thickness D, the virtual emission spots v1 to vn are arranged along the normal H to the VIPA plate 52 at fixed intervals of 2D. As to the virtual emission spots v1 and v2, a line segment pq = a line segment qr = D holds, and therefore, the distance between the virtual emission spots v1 and v2 is equal to 2D along the normal H to the VIPA plate 52. The other virtual emission spots are also located at intervals of 2D.

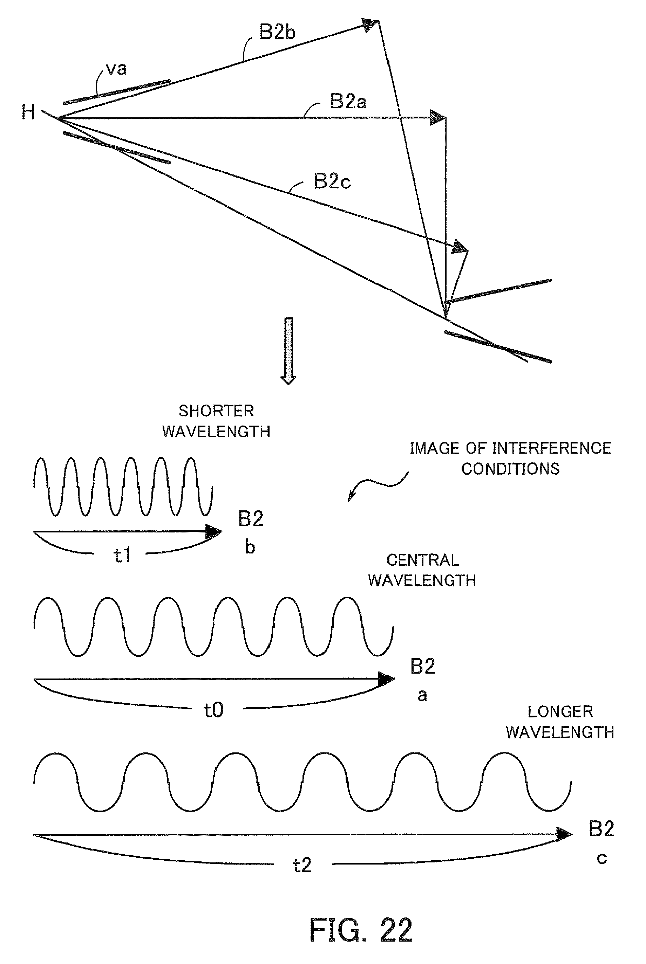

FIG. 22 illustrates interference conditions of the VIPA 50. Of beams emitted from an emission spot va, a beam B2a is assumed to have m wavelength cycles within a path t0 through the VIPA plate (the beam B2a is assumed to have an intermediate wavelength). In this case, when the interference conditions are satisfied between the beam B2a and a beam B2b above the beam B2a such that the beams B2a and B2b are intensified by each other, since a path t1 of the beam B2b is shorter than the path t0, in order for the beam B2b to have m wavelength cycles within the path t1, it is necessary that the wavelength of the beam B2b is shorter than the wavelength of the beam B2a.

Further, when the interference conditions between the beam B2a and a beam B2c below the beam B2a are satisfied such that the beams B2a and B2c are intensified by each other, since a path t2 of the beam B2c is longer than the path t0, in order for the beam B2c to have m wavelength cycles within the path t2, it is necessary that the wavelength of the beam B2c is longer than the wavelength of the beam B2a.

Therefore, with respect to the beams emitted from the VIPA plate 52, the interference conditions that the beams are intensified by each other are that the upper beams with respect to the optical axis have shorter wavelengths and the lower beams with respect to the same have longer wavelengths, so that the VIPA plate 52 emits beams having shorter wavelengths on the upper side of the optical axis thereof, and beams having longer wavelengths on the lower side of the optical axis thereof.

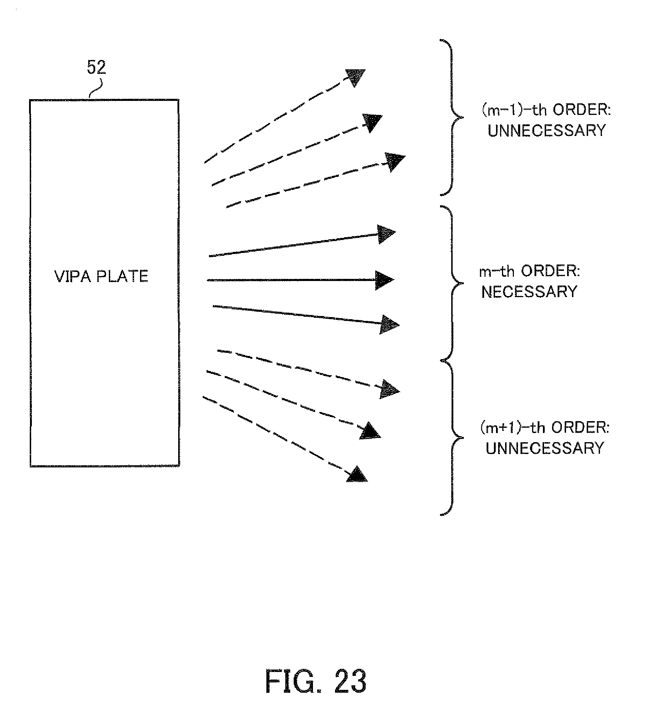

FIG. 23 is a conceptual diagram of orders of diffracted beams from the VIPA plate 52. Beams of an m-th diffraction order (which is a positive or negative integer indicative of a direction of travel of a split beam of light diffracted by the diffraction grating) are emitted from intermediate emission points of the VIPA plate 52. Further, beams of an (m-1)-th order are emitted from emission points above the intermediate emission points, and beams of an (m+1)-th order are emitted from emission points below the intermediate emission points. Thus, beams of various diffraction orders are emitted from the VIPA plate 52, but attention is focused only on beams of an order necessary for control.

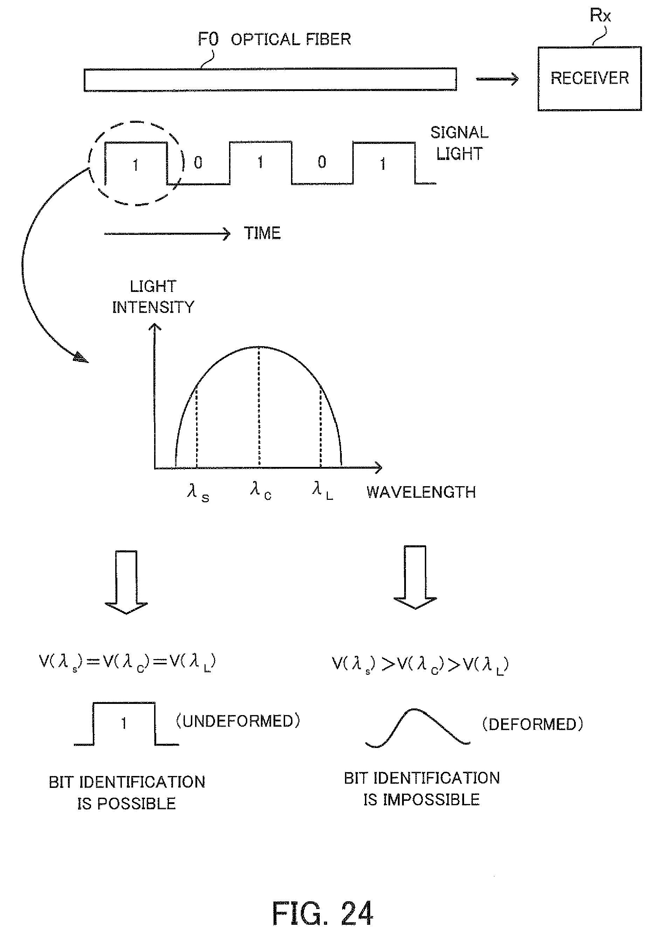

Next, a description will be given of reception degradation due to wavelength dispersion. FIG. 24 is a diagram useful in explaining a state where normal reception is unable to be performed due to occurrence of wavelength dispersion. It is assumed that a signal light having data "0" and "1" is flowing through an optical fiber F0. Now, when attention is paid to a spectrum of a one-bit pulse, the spectrum of the one-bit pulse includes a plurality of wavelengths. An intermediate wavelength of the spectrum is represented by λ_{c}, a longer wavelength than the intermediate wavelength by λ_{L}, and a shorter wavelength than the intermediate wavelength by λₛ. Further, the speed of the wavelength λ_{c} is represented by V(λ_{c}), the speed of the wavelength λ_{L} by V(λ_{L}), and the speed of the wavelength λₛ by V(λₛ).

When spectrum components having the respective wavelengths λ_{c}, λ_{L}, and λₛ are transmitted through the optical fiber F0 to a receiver Rx at the same speed (V(λ_{c}) = V(λ_{L}) = V(λₛ)), the waveform of the one bit is not deformed, and therefore bit identification can be normally performed.

However, when wavelength dispersion occurs e.g. due to an increase in transmission distance, differences in speed are caused between the wavelengths in the spectrum of the one-bit pulse such as V(λₛ) > V(λ_{c}) > V(λ_{L}). When such speed differences occur, the transmission waveform of the one bit is deformed, which makes it impossible for the receiver Rx to perform accurate bit identification.

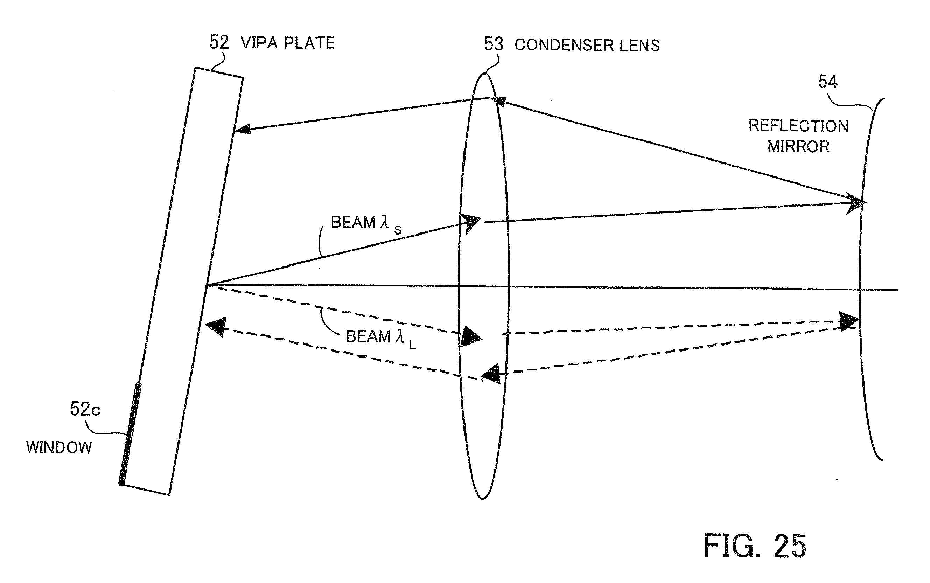

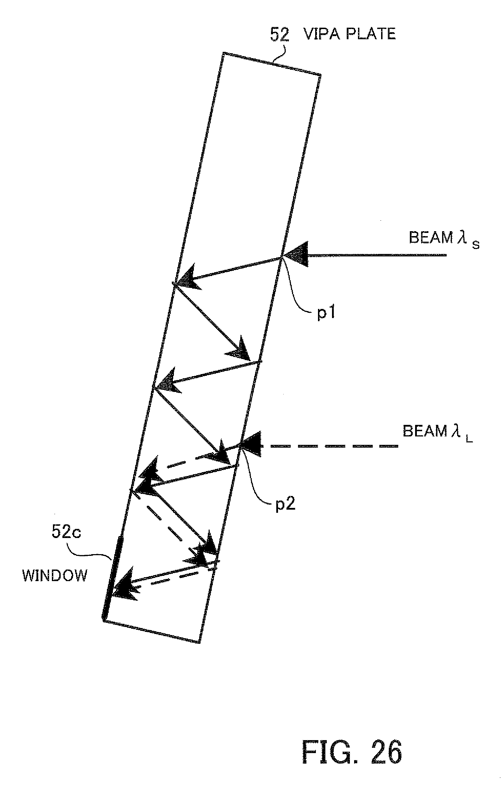

Next, dispersion compensation performed using the VIPA 50 will be described with reference to FIGS. 25 and 26. FIGS. 25 and 26 are views useful in explaining the concept of the VIPA dispersion compensation. A condenser lens 53 and a reflection mirror 54 are disposed on the emission side of the VIPA plate 52. The condenser lens 53 collects diffracted light beams emitted from the VIPA plate 52 onto the reflection mirror 54.

The reflection mirror 54 has an aspherical shape, and reflects light in various directions according to reflecting positions. Further, the reflection mirror 54 can change a reflecting direction by its curved surface. A beam having a short wavelength λₛ (hereinafter referred to as "the beam λₛ") is reflected such that it returns to an upper portion of the VIPA plate 52 with respect to the center of the same, and a beam having a long wavelength λ_{L} (hereinafter referred to as "the beam λ_{L}") is reflected such that it returns to a lower portion of the VIPA plate 52 with respect to the center of the same.

Then, as illustrated in FIG. 26, the reflected beam λₛ reaches an upper point p1 on the VIPA plate 52 and enters the VIPA plate 52 again. The beam λₛ having entered the VIPA plate 52 repeatedly undergoes a large number of reflections, followed by being emitted from the window 52c. On the other hand, the reflected beam λ_{L} reaches a lower point p2 on the VIPA plate 52 and enters the VIPA plate 52 again. The beam λ_{L} having entered the VIPA plate 52 repeatedly undergoes a small number of reflections, followed by being emitted from the window 52c.

Thus, beams reflected from the reflection mirror 54 reach the VIPA plate 52, and positions on the VIPA plate 52 where the beams reach differ according to the wavelength of each beam, and hence there are produced differences between times which the beams take to return to the window 52c after undergoing multiple reflection within the VIPA plate 52. In short, it is possible to generate wavelength-specific time differences (dispersion) (i.e. it is possible to generate a group delay time difference).

In the above case, since the beam λs having a short wavelength reaches the receiver Rx earliest, and the beam λ_{L} having a long wavelength latest, due to wavelength dispersion, a delay time period associated with the beam λₛ having a short wavelength is increased (this may be put as: the beam λₛ having a short wavelength is caused to make a detour before it is emitted from the window 52c of the VIPA plate 52), and a delay time period associated with the beam λ_{L} having a long wavelength is reduced (this may be put as: the beam λ_{L} is caused to take a shortcut before it is emitted from the window 52c of the VIPA plate 52), whereby the wavelength dispersion that occurred between optical transmission paths is compensated for.

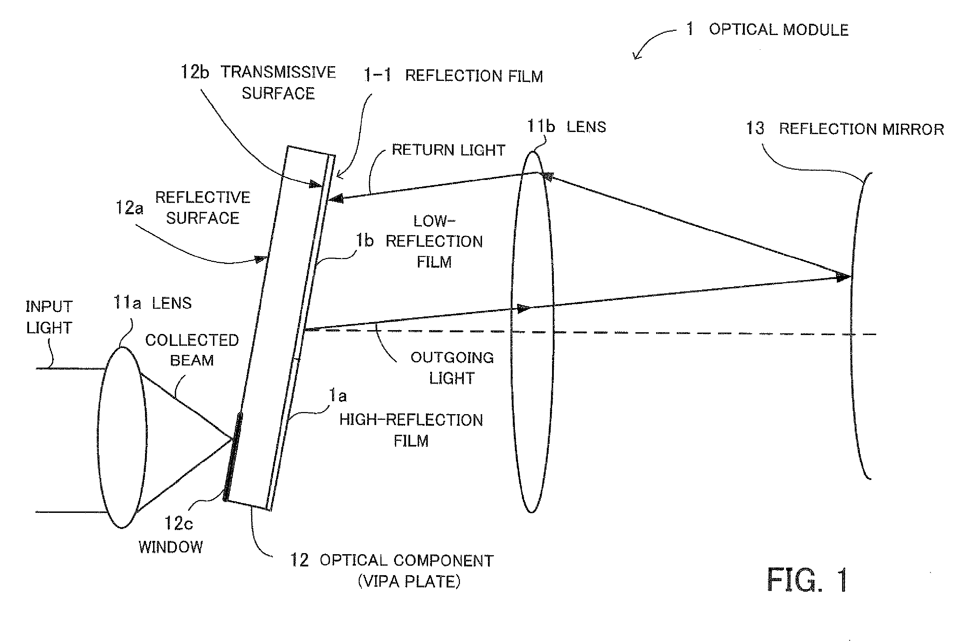

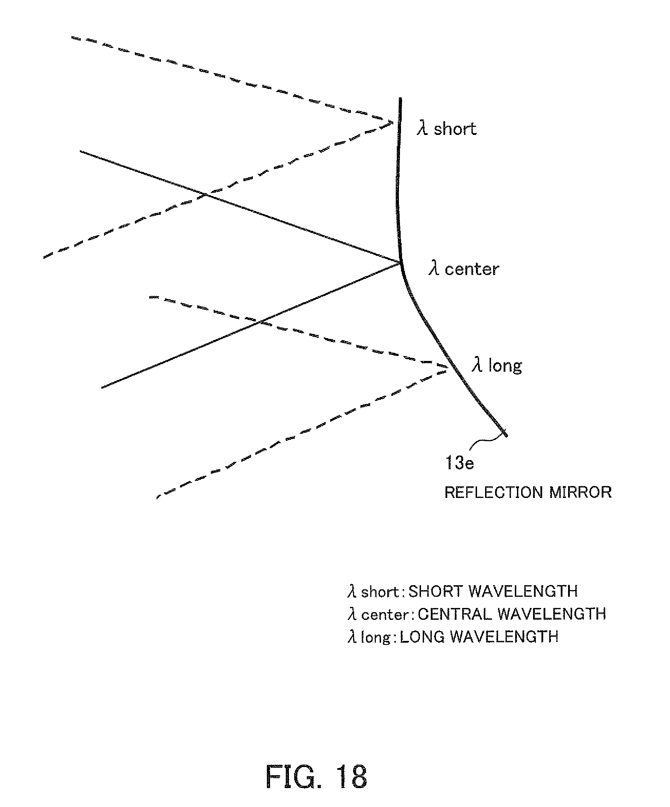

The dispersion compensator using the VIPA has been proposed as the related art in Japanese PCT application translation Publication No. 2000-511655 (pages 32-33, FIG. 18). Further, as an application of the VIPA plate, a technique in which a stress correcting film is provided to maintain stress balance of the VIPA plate has been proposed in Japanese Laid-Open Patent Publication No. 2004-117747 (paragraphs [0026] to [0028], FIG. 1).

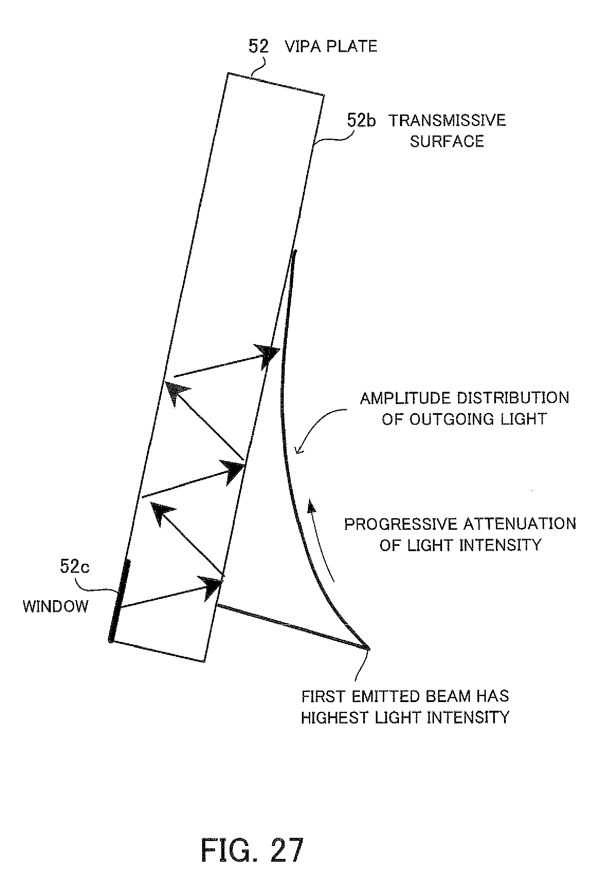

However, the above-described VIPA dispersion compensation suffers from a large optical loss. More specifically, when a comparison is made between incident light that enters the VIPA plate 52 via the window 52c and outgoing light emitted from the window 52c after being output from the transmissive surface 52b of the VIPA plate 52 and reflected by the reflection mirror 54, and then entering the VIPA plate 52 again through the transmissive surface 52b, it is found that the outgoing light has undergone wavelength dispersion compensation, but suffers from a large optical loss compared with the incident light (i.e. excessive loss occurs). Hereafter, why the excessive loss occurs will be described with reference to FIGS. 27 to 31.

FIG. 27 illustrates an amplitude distribution of outgoing light from the VIPA plate 52. In the VIPA plate 52, light having entered the VIPA plate 52 via the window 52c is emitted little by little from the transmissive surface 52b while undergoing multiple reflection within the VIPA plate 52.

For this reason, a light beam emitted first from the transmissive surface 52b has a highest light intensity, and as reflection is repeated, the intensity of emitted light geometrically decreases. Therefore, beams having respective wavelengths emitted from the VIPA plate 52 are emitted as those having an attenuation curve of amplitude distribution illustrated in FIG. 27.

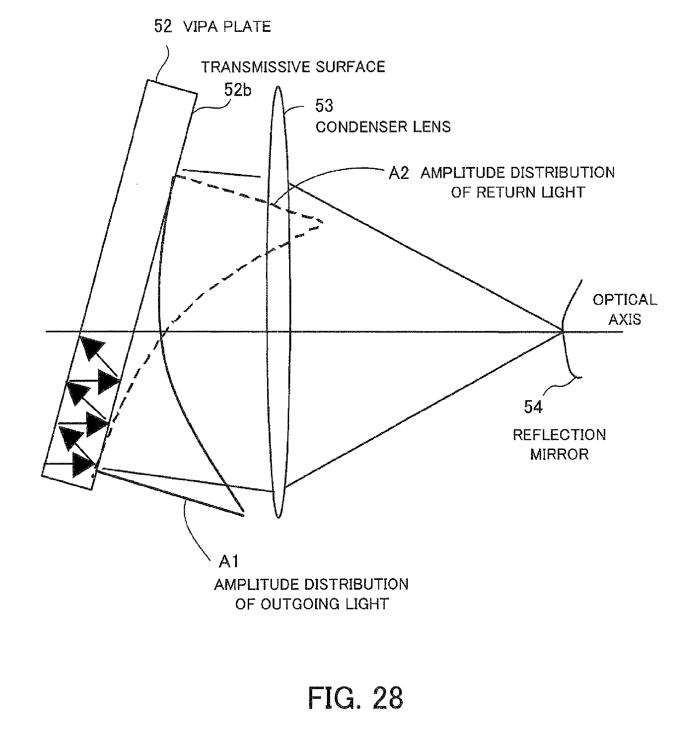

FIG. 28 illustrates an amplitude distribution of return light generated by reflection of the outgoing light. A1 represents an amplitude distribution of the outgoing light which converges on the reflection mirror 54 through the condenser lens 53, and is reflected from the reflection mirror 54. The reflected light enters the condenser lens 53 again and is collimated. Therefore, an amplitude distribution A2 of the return light (i.e. the outgoing light reflected from the reflection mirror 54) is inverted with respect to the amplitude distribution A1.

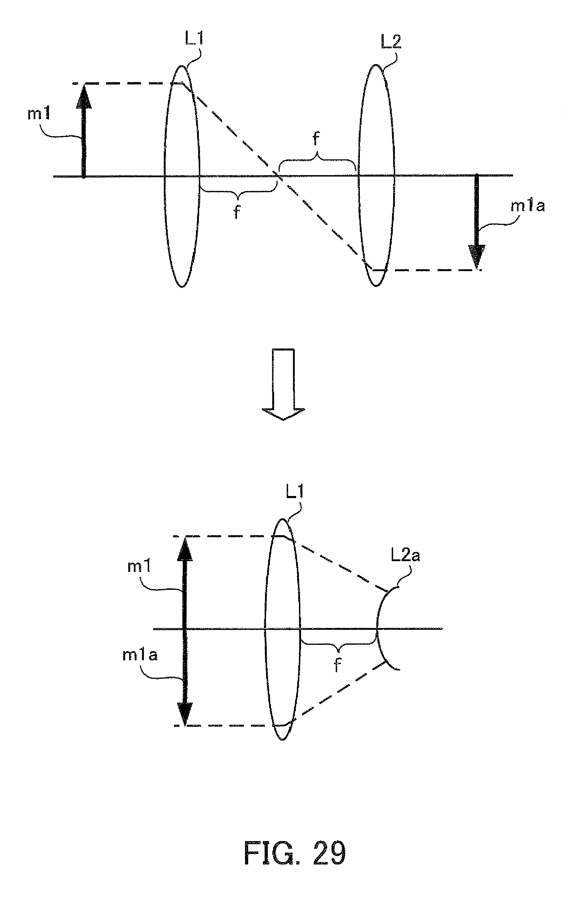

FIG. 29 illustrates return light has an inverted distribution of the distribution of outgoing light. Lenses L1 and L2 each having a focal distance f are arranged as illustrated in FIG. 29, and light is applied to an object m1 disposed outward of the lens L1. Then, an inverted image m1a of the object m1 appears outward of the lens L2.

When a mirror L2a is disposed in place of the lens L2 at a location spaced from the lens L1 by the focal distance f, and light is applied to the object m1 similarly to the above, the inverted image m1a is formed below the object m1 by the return light. The same phenomenon as this occurs in FIG. 28.

Thus, the outgoing light having the amplitude distribution A1 and emitted from the transmissive surface 52b is reflected from the reflection mirror 54 and appears again on the transmissive surface 52b as the return light having the amplitude distribution A2, as illustrated in FIG. 28. In this case, only return light beams identical in phase and amplitude to outgoing light beams can be coupled with the outgoing light beams. More specifically, only return light beams in the same state (the same phase and the same amplitude) as outgoing light beams are allowed to enter the VIPA plate 52 via the transmissive surface 52b and to be emitted from the window 52c after having undergone multiple reflection within the VIPA plate 52.

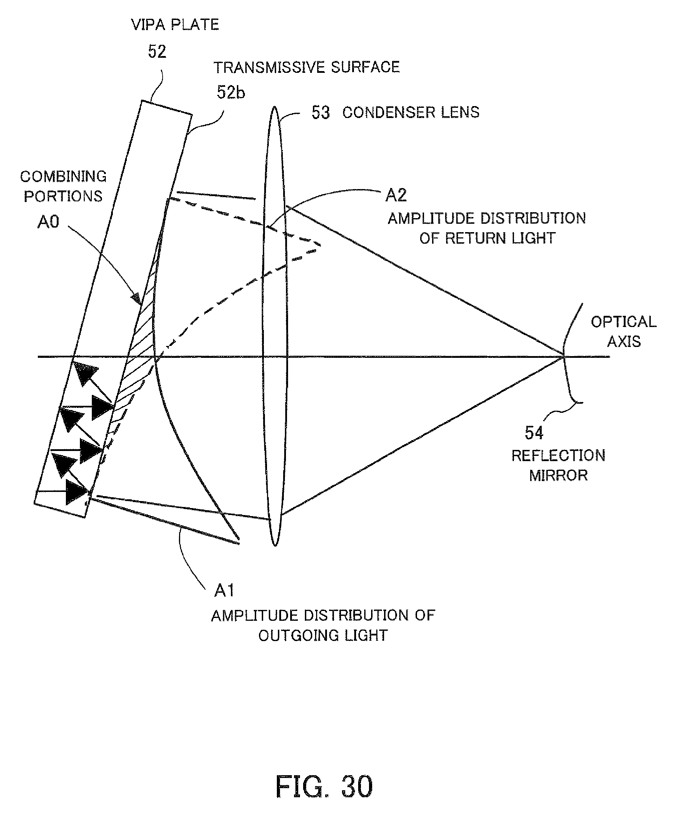

FIG. 30 illustrates combining portions of the outgoing light and the return light. The combining portions (hereinafter also referred to as "the overlapping portions") A0 of the outgoing light and the return light which is the same as the outgoing light in the phase and amplitude are represented by hatching in FIG. 30, and only return light beams contained in this area indicated by hatching are allowed to enter the VIPA plate 52 via the transmissive surface 52b. This means that the larger the overlap is, the more excellent the transmission characteristics are.

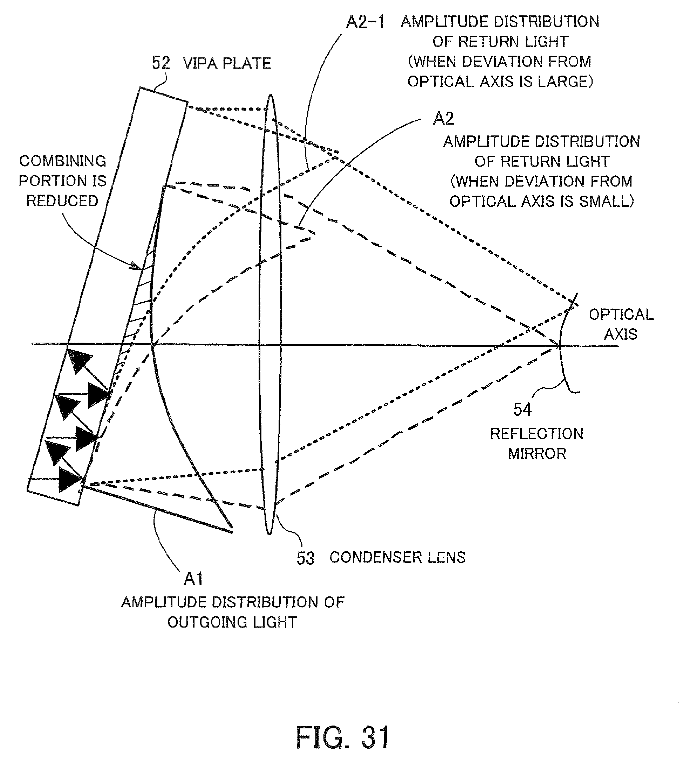

FIG. 31 is a view useful in explaining that a location where the amplitude distribution of return light appears is different depending on the wavelength. As illustrated in FIG. 30, when return light has a wavelength with which the return light propagates in the vicinity of the optical axis and reaches the VIPA plate 52, the overlap between the amplitude distribution A1 of the outgoing light and the amplitude distribution A2 of the return light is somewhat large.

On the other hand, as described above, in a case where dispersion compensation is performed, a beam having a wavelength which requires a large time difference (i.e. requires an increased number of multiple reflection) is reflected by the reflection mirror 54 such that the reflected beam returns to a position on the transmissive surface 52b further deviated from the optical axis. Therefore, the return (light) contains beams which are deviated from the optical axis and have wavelengths having an amplitude distribution A2-1.

This return light returns to the VIPA plate 52 while traveling in a manner deviated from the optical axis, and hence the overlap between the amplitude distribution A1 of the outgoing light and the amplitude distribution A2-1 of the return light becomes smaller. As described above, a beam having a wavelength more different in length from a central wavelength propagates along an optical path further deviated from the optical axis, and since the overlap between the amplitude distribution of outgoing light and that of return light is smaller as the deviation from the optical axis is larger, there occurs a larger excessive loss.

Further, the amplitude distribution A1 per se of the outgoing light is asymmetrical with respect to the optical axis, and hence even if the overlap between the amplitude distribution A1 and the amplitude distribution of return light that returns to the VIPA plate 52 while traveling in the vicinity of the optical axis is inherently small, and occurrence of a large excessive loss is inevitable in the

### related art.

### SUMMARY

It is an object of the embodiment to provide an optical module which is capable of controlling reflection characteristics of a transmissive surface of a VIPA plate such that combining portions of outgoing light from the VIPA plate and return light returning to the same are increased, to thereby achieve reduction of excessive loss.

According to an aspect of the embodiment, an optical module for performing wavelength division, includes: a lens which collects input light to generate a collected beam; an optical component which includes a reflective surface for highly reflecting light and a transmissive surface on which a reflection film having a lower reflectivity than the reflective surface is deposited, causes multiple reflection of the input collected beam in an internal area between the reflective surface and the transmissive surface, and emits diffracted light via the transmissive surface; and a reflection mirror adapted to reflect outgoing light emitted from the transmissive surface to generate return light and cause the generated return light to return to the transmissive surface, wherein the reflection film includes a high-reflection film having a higher reflectivity and a low-reflection film having a lower reflectivity, and wherein the high-reflection film is deposited on a portion of the transmissive surface, from which the outgoing light having a higher light intensity is emitted, and the low-reflection film is deposited on a portion of the transmissive surface, from which the outgoing light having a lower light intensity is emitted, so as to increase combining portions of the outgoing light and the return light.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWINGS

FIG. 1 is a principle diagram of an optical module;
FIG. 2 is a diagram useful in explaining the basic concept of the optical module;
FIGS. 3A and 3B are schematic diagrams of characterizing features of the optical module;
FIG. 4 is a view useful in explaining an example of a deposition method;
FIG. 5 illustrates an amplitude distribution of outgoing light and an amplitude distribution of return light obtained as simulation results;
FIG. 6 illustrates an amplitude distribution of outgoing light and an amplitude distribution of return light obtained as simulation results;
FIG. 7 illustrates transmission characteristics obtained as simulation results;
FIG. 8 is a view useful in explaining the arrangement of a dispersion compensator;
FIG. 9 is a view useful in explaining the arrangement of a variation of the dispersion compensator;
FIG. 10 is a view useful in explaining the arrangement of another variation of the dispersion compensator;
FIG. 11 is a view useful in explaining the arrangement of another variation of the dispersion compensator;
FIG. 12 is a view useful in explaining how a reflection mirror rotates;
FIGS. 13A and 13B illustrate reflection patterns;
FIG. 14 illustrates a shape pattern of the reflection mirror;
FIG. 15 illustrates a shape pattern of the reflection mirror;
FIG. 16 illustrates a shape pattern of the reflection mirror;
FIG. 17 illustrates a shape pattern of the reflection mirror;
FIG. 18 illustrates a shape pattern of the reflection mirror;
FIG. 19 illustrates a shape pattern of the reflection mirror;
FIG. 20 is a view of the basic construction of the VIPA;
FIG. 21 is a view useful in explaining the outline of the operation of the VIPA;
FIG. 22 illustrates interference conditions of the VIPA;
FIG. 23 is a conceptual diagram of orders of diffracted beams from a VIPA plate;
FIG. 24 is a diagram useful in explaining a state where normal reception is unable to be performed due to occurrence of wavelength dispersion;
FIG. 25 is a view useful in explaining the concept of VIPA dispersion compensation;
FIG. 26 is a view useful in explaining the concept of the VIPA dispersion compensation;
FIG. 27 illustrates an amplitude distribution of outgoing light from the VIPA plate;
FIG. 28 illustrates an amplitude distribution of return light as reflection of the outgoing light;
FIG. 29 illustrates that return light has an amplitude distribution inverted with respect to the amplitude distribution of outgoing light;
FIG. 30 illustrates combining portions of the outgoing light and the return light; and
FIG. 31 is a view useful in explaining that a location where the amplitude distribution of return light appears is different depending on the wavelength.

### DESCRIPTION OF EMBODIMENT(S)

An embodiment of the present invention will be described below with reference to the accompanying drawings, wherein like reference numerals refer to like elements throughout.

FIG. 1 is a principle diagram of an optical module. The optical module 1 comprises lenses 11a and 11b, an optical component 12 (VIPA plate 12), and a reflection mirror 13, and is used in a dispersion compensator or the like.

The lens 11a collects input light to generate a collected light beam. The VIPA plate 12 has a reflective surface 12a (which is a surface coated with a reflection film having a reflectivity of 100% or close to 100%) for highly reflecting light, and a transmissive surface 12b on which a reflection film (dielectric film) 1-1 having a lower reflectivity than the reflective surface 12a is deposited.

The VIPA plate 12 causes the collected light beam incident thereon via a window 12c to undergo multiple reflection in an internal area between the reflective surface 12a and the transmissive surface 12b, and emits diffracted light via the transmissive surface 12b. The lens 11b collects the diffracted light emitted from the transmissive surface 12b, onto the reflection mirror 13. The reflection mirror 13 reflects the outgoing light emitted from the transmissive surface 12b to generate return light, and causes the return light to return to the transmissive surface 12b of the VIPA plate 12.

The reflection film 1-1 includes a high-reflection film 1a having a higher reflectivity and a low-reflection film 1b having a lower reflectivity. The high-reflection film 1a is deposited by vapor deposition on a portion of the transmissive surface 12b from which outgoing light having a higher light intensity is emitted, and the low-reflection film 1b is deposited by vapor deposition on a portion of the transmissive surface 12b from which outgoing light having a lower light intensity is emitted.

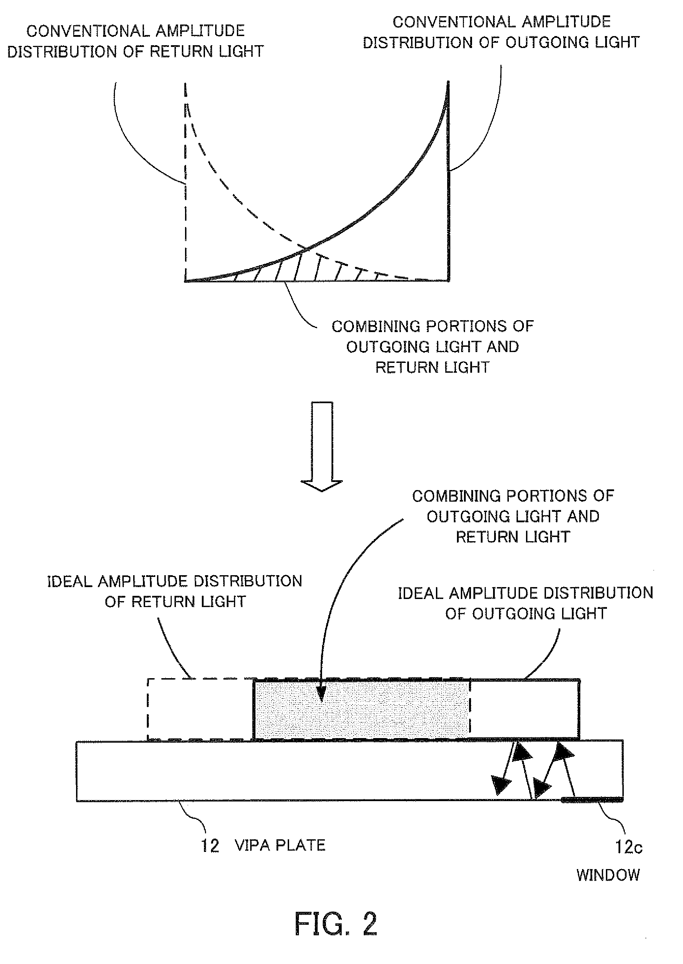

Next, a description will be given of the basic concept of reflection control performed by the transmissive surface 12b of the optical module 1. FIG. 2 is a diagram useful in explaining the basic concept of the optical module 1. As described hereinabove, the amplitude distribution of outgoing light is asymmetric with respect to an optical axis, and hence even when deviation of return light from the optical axis is small, combining portions of the outgoing light and the return light are small, which causes large excessive loss.

In contrast, if the amplitude distribution of outgoing light could be idealistically formed to have a rectangular shape, the amplitude distribution of return light would also have a rectangular shape, which makes the combining portions of the outgoing light and the return light much larger than in the conventional amplitude distribution of an attenuation curve type. This means that an optical module can be realized which is tolerant of optical axis deviation and is capable of reducing excessive loss.

Actually, however, it is impossible to emit light such that the outgoing light has a rectangular amplitude distribution. Therefore, in the VIPA plate 12 of the optical module 1, reflection control is performed using the transmissive surface 12b such that return light beams identical in phase and amplitude to outgoing light beams are increased, whereby an amplitude distribution is caused to have a shape closest possible to a rectangular shape to increase the combining portions, thereby attaining suppression of excessive loss.

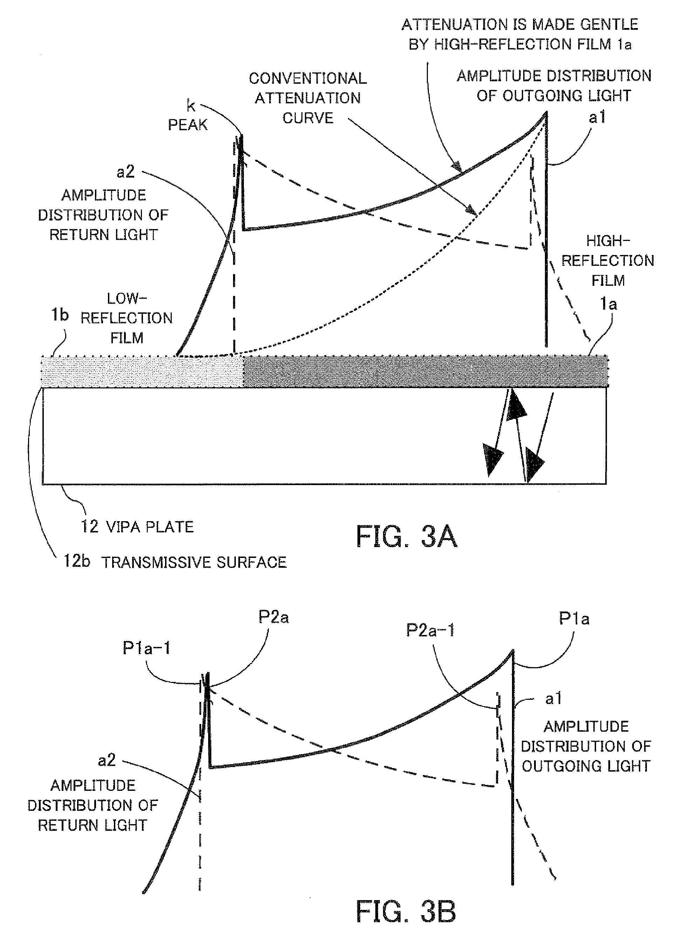

Next, a description will be given of the characterizing features of the reflection control of the optical module 1. FIGS. 3A and 3B are schematic diagrams of the characterizing features of the optical module 1. In order to increase the combining portions of outgoing light and return light, attenuation of the outgoing light is made gentle by the high-reflection film 1a having a higher reflectivity formed on the transmissive surface 12b by vapor deposition, and the low-reflection film 1b having a lower reflectivity is formed by vapor deposition so as to cause remaining light energy to be completely discharged.

Specifically, the high-reflection film 1a having a higher reflectivity of 98% to 99% is deposited on a portion of the transmissive surface 12b from which outgoing light having a higher light intensity is to be emitted, to thereby cause gentle attenuation of the amplitude distribution of the outgoing light. Then, the low-reflection film 1b having a lower reflectivity of 90% to 95% is deposited on a portion of the transmissive surface 12b from which outgoing light having a lower light intensity is to be emitted, to thereby cause all light (light energy) remaining unemitted from the VIPA plate 12 due to the high-reflection film 1a to be emitted (discharged), from the VIPA plate 12.

By thus forming the transmissive surface 12b into a two-section film structure, it is possible to make an amplitude distribution a1 of the outgoing light closer in shape to a rectangular shape in comparison with the conventional shape of an attenuation curve. On the other hand, an amplitude distribution a2 of the return light has a shape inverted with respect to that of the amplitude distribution a1 of the outgoing light, which clearly represents an increase of the combining portions of the outgoing light and the return light.

It is noted that in the amplitude distribution a1 of the outgoing light, a peak k appears at a boundary between a high reflection area and a low reflection area. This arises for the following reason. The high-reflection film 1a is usually deposited on the transmissive surface 12b such that the high-reflection film 1a occupies a larger portion of the transmissive surface 12b than the low-reflection film 1b does. In this case, assuming that, for example, 70% of light is emitted from the high-reflection, film having the high-reflectivity 1a, remaining 30% of the light is emitted from the low-reflection film 1b having the lower reflectivity. Consequently, 30% of the light is emitted collectively from the low-reflection film 1b at a short section of the transmissive surface 12b, which causes appearance of the peak k (therefore, if the reflectivity of the low-reflection film 1b is excessively low, or if a coated area of the same is small, the peak k becomes excessively high, and to prevent this, it is necessary to determine an appropriate value of the reflectivity by numerical computation).

Thus, in the amplitude distribution a1 of the outgoing light, a first light emission from the transmissive surface 12b causes appearance of a peak P1a as an amplitude having a highest light intensity and a peak P2a formed at the boundary between the high reflection area and the low reflection area. As is apparent from FIGS. 3A and 3B, when the amplitude distribution a1 of the outgoing light is thus formed, the two peaks P1a and P2a overlap respective peaks of the amplitude distribution of return light, particularly in a case where the outgoing light and the return light are symmetrical with respect to the optical axis, whereby the combining portions of the outgoing light and the return light are further increased.

More specifically, assuming that an amplitude, which corresponds to the peak P1a, in the amplitude distribution a2 of the return light is a peak P1a-1, and an amplitude, which corresponds to the peak P2a, in the amplitude distribution a2 of the return light is a peak P2a-1, the peak P1a of the outgoing light overlaps the peak P2a-1 of the return light, and the peak P2a of the outgoing light overlaps the peak P1a-1 of the return light.

By forming the transmissive surface 12b into the two-section film structure described above, it is possible to make the amplitude distributions of the two lights, i.e. the outgoing light and the return light, close in shape to a rectangle. As a consequence, the overlap between the outgoing light and the return light and the overlaps between the peaks of the outgoing light and those of the return light are formed, which considerably increases the overlap between the outgoing light and the return light to thereby attain reduction of excessive loss.

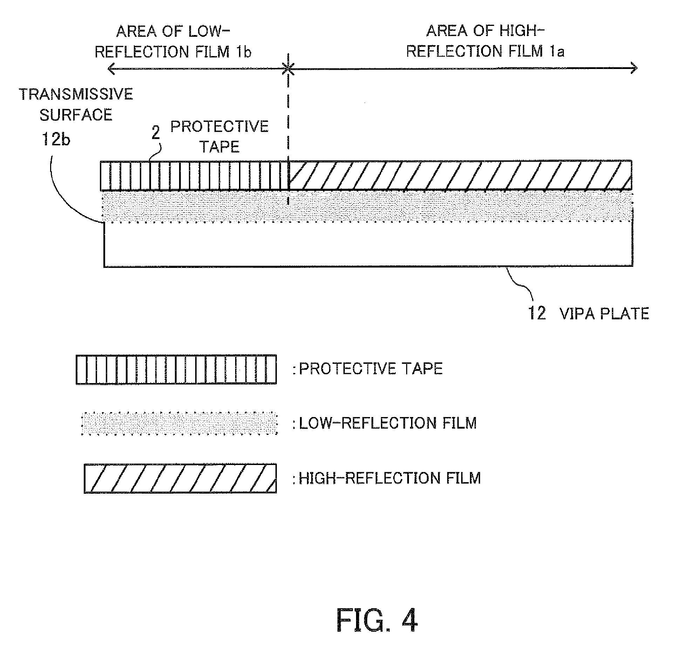

Next, a description will be given of a method of depositing the high-reflection film 1a and the low-reflection film 1b. FIG. 4 is a view useful in explaining an example of the deposition method. In the case of forming the transmissive surface 12b into the two-section film structure, first, the entire transmissive surface 12b is coated with a low-reflection film, and then a protective tape 2 is attached to a portion of the transmissive surface 12b where a low-reflectivity state is desired to be maintained. Further, a film (e.g. a low-reflectivity film) is deposited again on a portion where a high-reflectivity state is desired.

By this deposition, the portion protected by the protective tape 2 is formed into the low-reflection film 1b, and the portion unprotected by the protective tape 2 is formed into the high-reflection film 1a, whereby the transmissive surface 12b can have the two-section film structure. It is noted that a ratio (film ratio) in coating area between the high-reflection film 1a and the low-reflection film 1b differs depending on how far the amplitude distribution range (dispersion variable range) is to be spread on the transmissive surface 12b, and with an increase in the dispersion range, an area coated with the high-reflection film 1a becomes larger than an area coated with the low-reflection film 1b.

The method of using the VIPA plate 12 having the above-described film structure is the same as the general one. It is noted that the proportion (film ratio) between the high-reflection film 1a and the low-reflection film 1b and the reflectivity of each of the reflection films 1a and 1b depends on specifications demanded of a device (the dispersion variable range, a bandwidth, etc.), and hence the values are determined by carrying out numerical computation through simulations and the like.

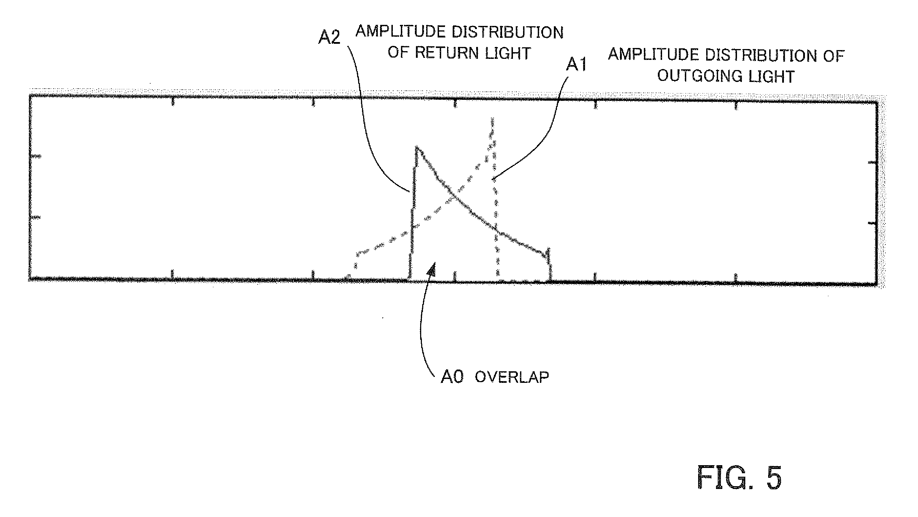

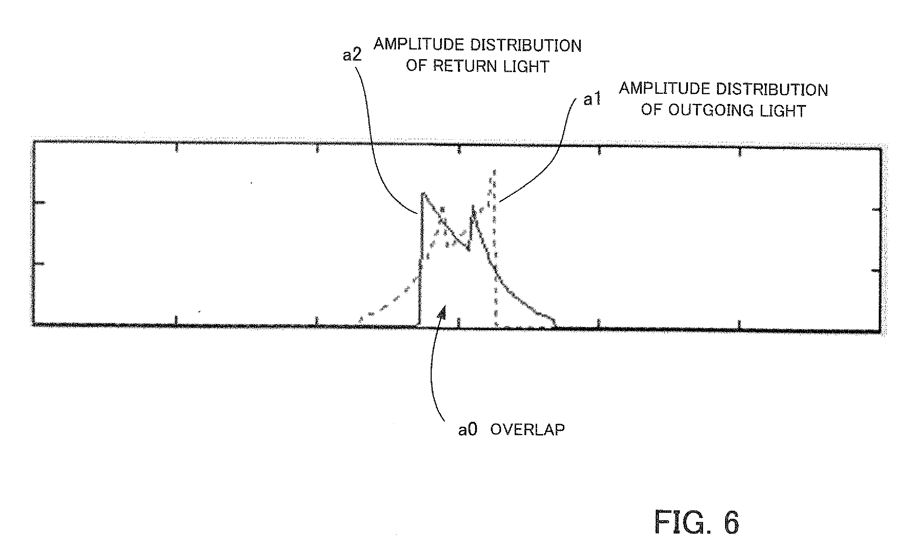

Next, a description will be given of the effects of the optical module 1. FIGS. 5 and 6 illustrate an amplitude distribution of outgoing light and an amplitude distribution of return light obtained as simulation results. In each of FIGS. 5 and 6, the ordinate represents an amplitude value, and the abscissa represents time. FIG. 5 illustrates the conventional amplitude distributions, and FIG. 6 illustrates the amplitude distributions generated by the optical module 1.

As is evident from comparison between FIGS. 5 and 6, an overlap a0 between the amplitude distributions generated by the optical module 1 is larger than an overlap A0 between the conventional attenuation curve-type amplitude distributions, and hence it is possible to conform that the coupling degree between outgoing light and return light has been improved.

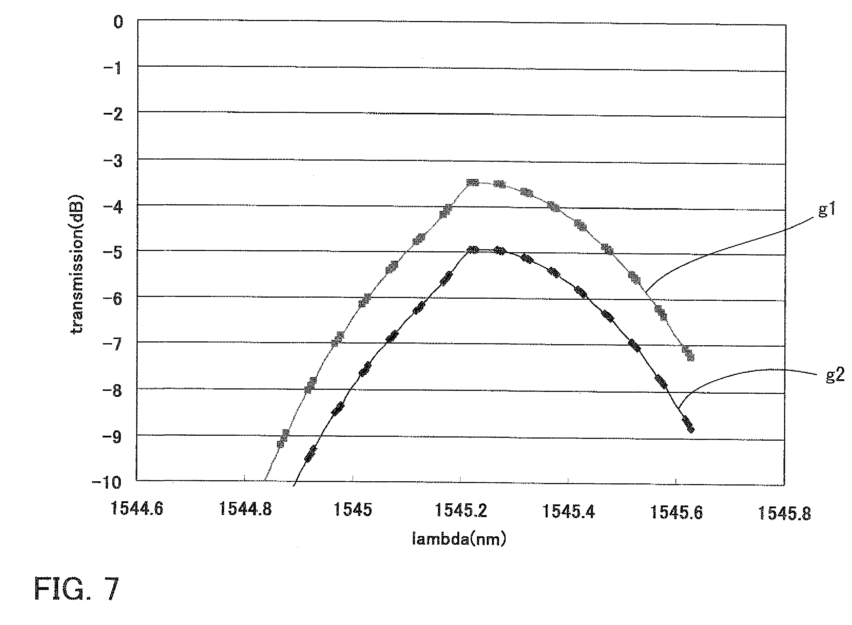

FIG. 7 illustrates transmission characteristics obtained as simulation results. The ordinate represents the value (dB) of the transmission characteristics and the abscissa represents wavelength (nm). A graph g1 indicates the transmission characteristics of the optical module 1, and a graph g2 indicates the conventional transmission characteristics.

The transmission characteristics depend on wavelength. When the value indicative of the transmission characteristics is 0 dB, light passes without any loss, which means that as the value indicative of the transmission characteristics of each wavelength is closer to 0 dB, the transmission characteristics thereof are more excellent (i.e. the excessive loss is smaller).

As can be understood from the graphs g1 and g2, the optical module 1 has the transmission characteristics of each wavelength improved by approximately 1.5 dB. For example, as for a wavelength of 1545.2 nm, excessive loss is conventionally 5 dB as illustrated in the graph g2, whereas it is 3.5 dB in the optical module 1 as illustrated in the graph g1. This means that the transmission characteristics have been improved by 1.5 dB.

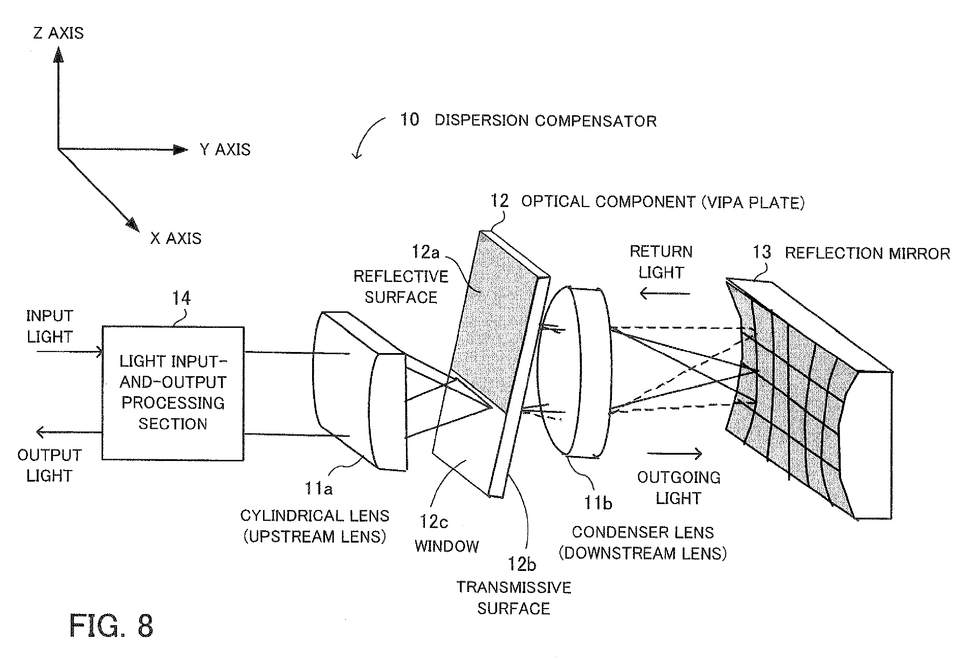

Next, a description will be given of a dispersion compensator to which the optical module 1 is applied. FIG. 8 is a view useful in explaining the arrangement of a dispersion compensator. The dispersion compensator 10 comprises a light input-and-output processing section 14, the cylindrical lens 11a (upstream lens), the optical component (VIPA plate) 12, the condenser lens 11b (downstream lens), and the reflection mirror 13.

The light input-and-output processing section 14 separates optical paths from each other so as to prevent input light input to the light input-and-output processing section 14 and output light internally processed (i.e. output light having undergone dispersion compensation and returning from the VIPA plate 12) from overlapping each other. More specifically, the optical paths are separated from each other so as to prevent overlapping of input light before reaching the VIPA plate 12 and output light returning from the VIPA plate 12.

The cylindrical lens 11a collects light (input light) output from the light input-and-autput processing section 14, such that the collected light enters the window 12c of the VIPA plate 12. Light having undergone multiple reflection in the VIPA plate 12 and emitted as diffracted beams from the VIPA plate 12 are collected onto the reflection mirror 13 via the condenser lens 11b. The reflection mirror 13 reflects the outgoing light beams emitted from the transmissive surface 12b to generate return light beams. The return light beams reflected from the reflection mirror 13 return through the condenser lens 11b to respective predetermined positions, each of which is necessitated so as to give a wavelength-specific delay time difference, on the transmissive surface 12b of the VIPA plate 12. It is noted that when the light traveling direction is represented by a y axis, a direction vertically orthogonal to the light traveling direction by a Z axis, and a direction orthogonal to both the y axis and the Z axis by an x axis, the reflection mirror 13 can move, according to necessity, about the z axis as a rotational axis.

The light beams having undergone multiple reflection in the VIPA plate 12 and emitted from the window 12c have been dispersion-compensated by the control described hereinabove with reference to FIGS. 25 and 26, and the cylindrical lens 11a collimates the dispersion-compensated light beams (output light) and inputs the collimated light beams into the light input-and-output processing section 14. The light input-and-output processing section 14 sends out the output light while preventing the output light from overlapping input light. It is noted that dispersion compensation by the VIPA plate 12 is described in detail hereinabove, and hence description thereof is omitted here.

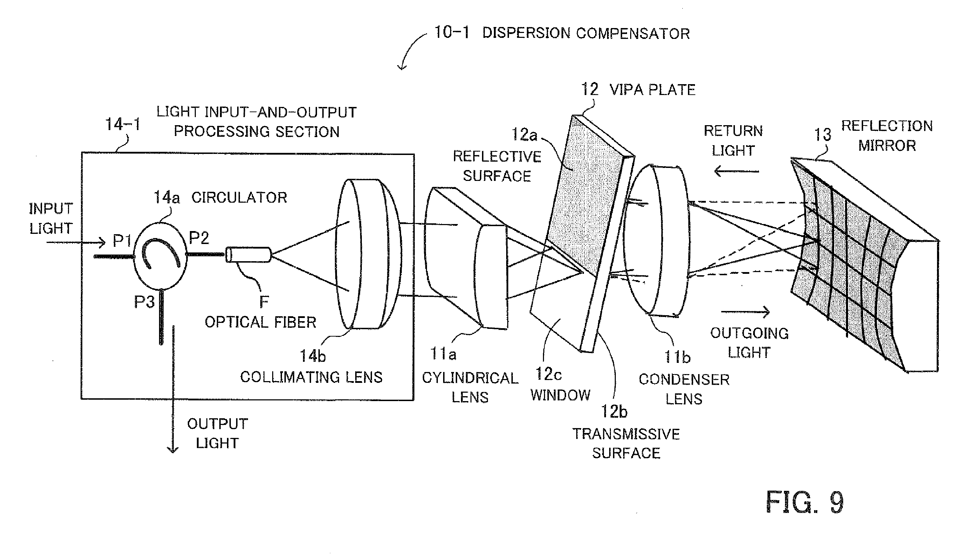

Next, a description will be given of a variation of the dispersion compensator 10. FIG. 9 is a view useful in explaining the arrangement of a dispersion compensator 10-1. The dispersion compensator 10-1 has a light input-and-output processing section 14-1 including a circulator 14a, a collimating lens 14b, and an optical fiber F. The dispersion compensator 10-1 is identical in construction to the FIG. 8 dispersion compensator 10 in the other respects, and therefore only the light input-and-output processing section 14-1 will be described below.

The circulator 14a has three ports P1 to P3. The circulator 14a is configured to output light input via the port P1 from the port P2, and output light input via the port P2 from the port P3.

Light having entered the port P1 of the circulator 14a is output from the port P2 and is input into the optical fiber F. Light output from optical fiber F is collimated by the collimating lens 14b, and the collimated light beams travel toward the cylindrical lens 11a.

Dispersion-compensated output light from the window 12c of the VIPA plate 12 is collimated by the cylindrical lens 11a, and the collimated light beams are collected by the collimating lens 14b and the collected light is input into the optical fiber F. Then, output light from the optical fiber F enters the port P2 of the circulator 14a and is guided into the port P3, followed by being sent toward an output path. It is noted that in a dispersion compensator of a type like the dispersion compensator 10-1 in which input light and output light are separated by the circulator 14a, it is not necessary to move the reflection mirror 13.

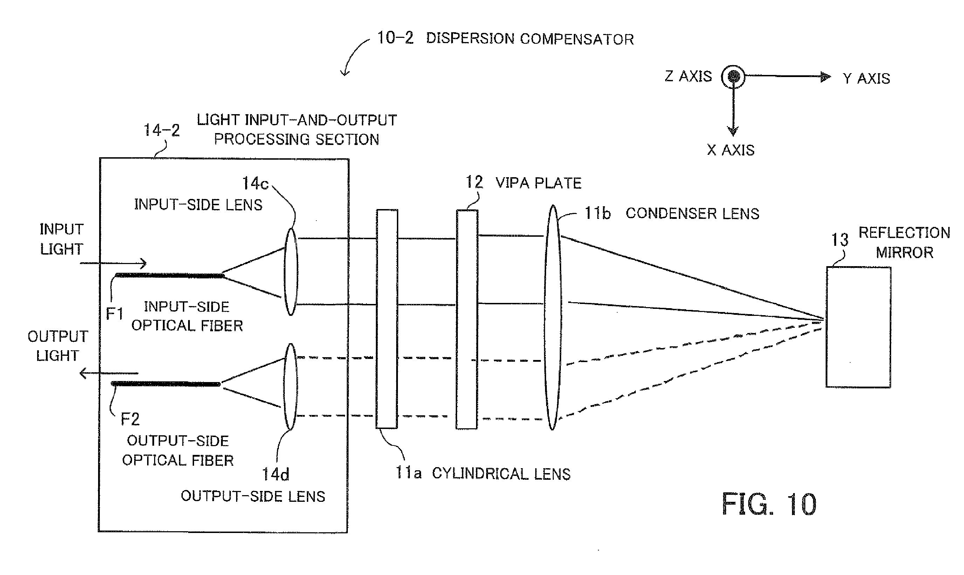

FIG. 10 is a view useful in explaining the arrangement of another variation of the dispersion compensator 10 in FIG. 8. FIG. 10 illustrates a dispersion compensator 10-2 as viewed from right above (i.e. as viewed from above along the z axis). The dispersion compensator 10-2 has a light input-and-output processing section 14-2 including an input-side optical fiber F1, an output-side optical fiber F2, an input-side lens 14c, and an output-side lens 14d. The dispersion compensator 10-2 is identical in construction to the FIG. 8 dispersion compensator 10 in the other respects, and therefore only the light input-and-output processing section 14-2 will be described below.

The input-side optical fiber F1 and the output-side optical fiber F2 are arranged in parallel with each other. The input-side lens 14c is disposed between the input-side optical fiber F1 and the cylindrical lens 11a, and the output-side lens 14d is disposed between the output-side optical fiber F2 and the cylindrical lens 11a. The input-side lens 14c and the output-side lens 14d are arranged such that the optical axes of the two lens extend in parallel.

Input light output from the input-side optical fiber F1 is collimated by the input-side lens 14c, and the collimated light beams travel toward the cylindrical lens 11a. On the other hand, dispersion-compensated output light output from the VIPA plate 12 is collimated by the cylindrical lens 11a, and the collimated light beams are collected by the output-side lens 14d so as to be input into the output-side optical fiber F2.

The optical paths of the input light and the output light are separated by the light input-and-output processing section 14-2 constructed as above. It is noted that in a dispersion compensator of a type like the dispersion compensator 10-2 in which the input-side optical fiber F1 and the output-side optical fiber F2 are arranged in parallel to separate input light and output light from each other, the reflection mirror 13 is rotated about the z axis, according to necessity, to thereby change the direction of reflection so as to prevent the output light (return light from the reflection mirror 13) from overlapping the input light (outgoing light from the VIPA plate 12).

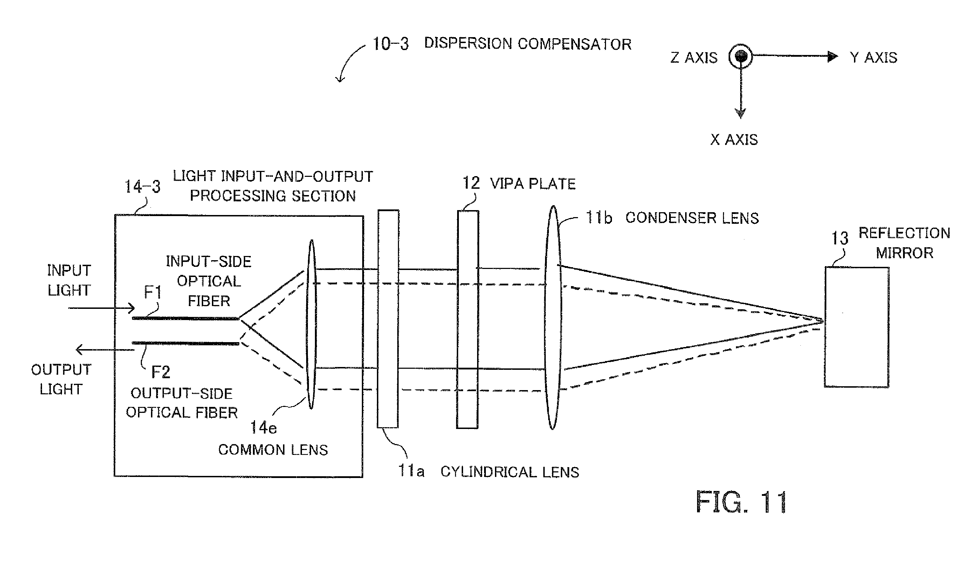

FIG. 11 is a view useful in explaining the arrangement of another variation of the dispersion compensator. FIG. 11 illustrates a dispersion compensator 10-3 as viewed from right above (i.e. as viewed from above along the z axis). The dispersion compensator 10-3 has a light input-and-output processing section 14-3 including the input-side optical fiber F1, the output-side optical fiber F2, and a common lens 14e. The dispersion compensator 10-3 is identical in construction to the FIG. 8 dispersion compensator 10 in the other respects, and therefore only the light input-and-output processing section 14-3 will be described below.

The input-side optical fiber F1 and the output-side optical fiber F2 are arranged in parallel with each other. The common lens 14e is disposed between the input and output-side optical fibers F1 and F2 and the cylindrical lens 11a.

Input light output from the input-side optical fiber F1 is collimated by the common lens 14e, and the collimated light beams travel toward the cylindrical lens 11a. On the other hand, dispersion-compensated output light output from the VIPA plate 12 is collimated by the cylindrical lens 11a and the collimated light beams are collected by the common lens 14e so as to be input into the output-side optical fiber F2.

The optical paths of the input light and the output light are separated by the light input-and-output processing section 14-3 constructed as above. It is noted that in a dispersion compensator of a type like the dispersion compensator 10-3 in which the input-side optical fiber F1 and the output-side optical fiber F2 are arranged in parallel to separate the input light and the output light from each other, the reflection mirror 13 is rotated about the z axis, according to necessity, to thereby change the direction of reflection so as to prevent the output light (return light from the reflection mirror 13) from overlapping the input light (outgoing light from the VIPA plate 12).

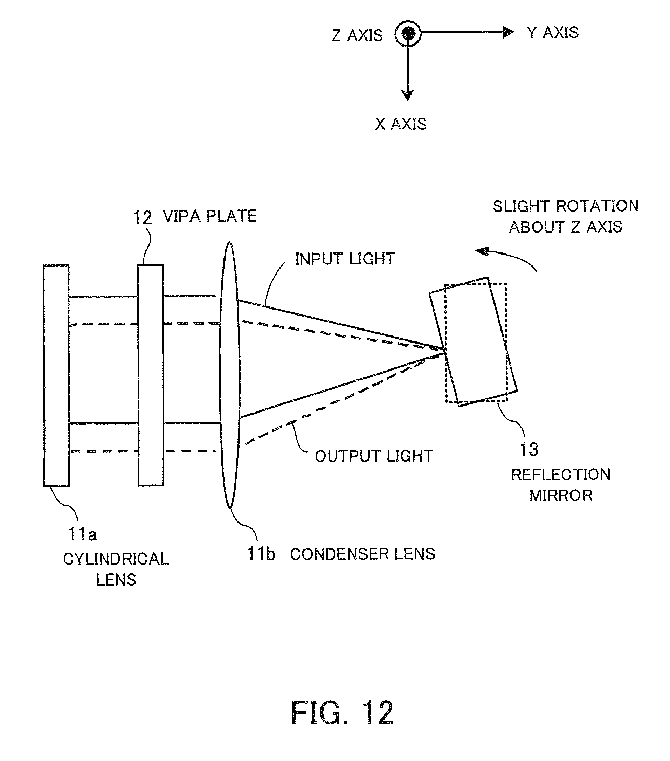

FIG. 12 is a view useful in explaining how the reflection mirror 13 rotates. The reflection mirror 13 performs rotation about the z axis to prevent overlapping between input light and output light. It is noted that the amount of rotation can be designated by a control device, not illustrated.

Next, a description will be given of the reflection mirror 13. As described hereinabove with reference to FIG. 24, occurrence of wavelength dispersion in optical fiber transmission causes a difference in arrival time in a receiver between a light beam having a shorter wavelength and one having a longer wavelength.

For this reason, in dispersion compensation, the reflection mirror reflects light such that a return light beam having a shorter wavelength reaches an upper part, as viewed in FIG. 1, of the transmissive surface of the VIPA plate, and a return light beam having a longer wavelength reaches a lower part, as viewed in FIG. 1, of the transmissive surface of the VIPA plate.

Such a reflection causes the return light beam having the shorter wavelength to repeatedly undergo more multiple reflection within the VIPA plate and then be output from the window, and the return light beam having the longer wavelength to repeatedly undergo less multiple reflection within the VIPA plate and then be output from the window. This makes it possible to eliminate wavelength-specific delay time differences and compensate for wavelength dispersion.

Therefore, the reflection mirror needs to have a mirror shape which makes it possible to reflect light beams emitted from the VIPA plate such that a return light beam having a shorter wavelength reaches the upper part of the transmissive surface of the VIPA plate, and a return light beam having a longer wavelength reaches the lower part of the transmissive surface of the VIPA plate.

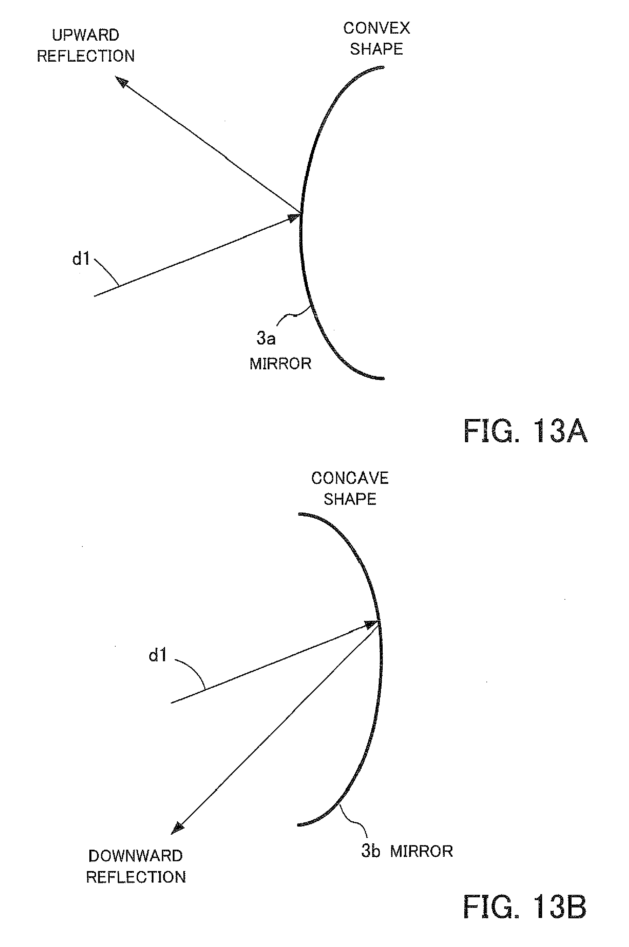

FIGS. 13A and 13B illustrate reflection patterns. On a mirror 3a having a convex shape, a light beam incident from a direction d1 is reflected upward, as viewed in FIG. 13A. On the other hand, on a mirror 3b having a concave shape, a light beam incident from the direction d1 is reflected downward, as viewed in FIG. 13B.

As is apparent from FIGS. 13A and 13B, basically, the reflection mirror is formed to have a convex mirror shape where short-wavelength outgoing light beams diffracted by the VIPA plate are collected and to have a concave mirror shape where long-wavelength outgoing light beams are collected.

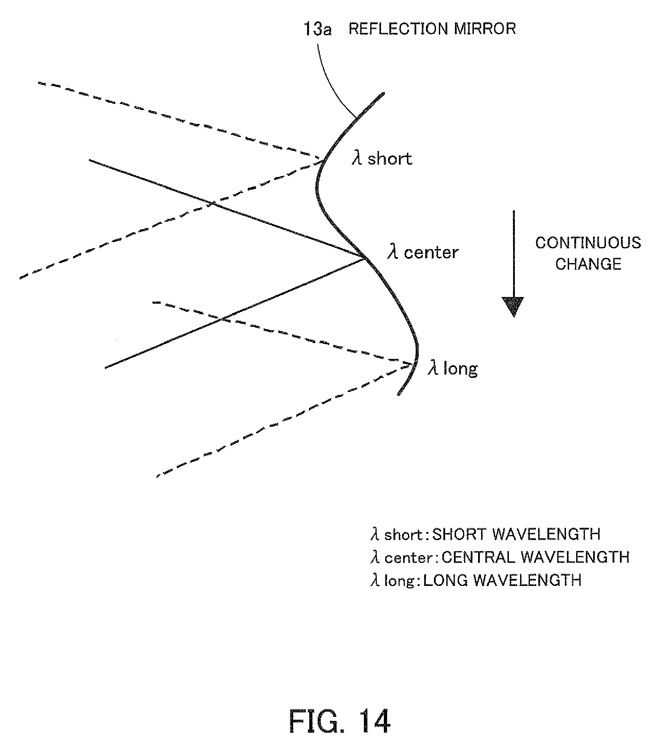

Next, a description will be given of the mirror shape of the reflection mirror 13. FIGS. 14 to 19 illustrate mirror shape patterns of the reflection mirror 13, i.e. the patterns of the mirror shape designed based on the concept explained with reference to FIGS. 13A and 13B.

A reflection mirror 13a illustrated in FIG. 14 is formed to have a mirror surface that continuously changes from a convex surface to a concave surface in accordance with change in wavelength of the outgoing light from short to long. It is noted that in any of FIGS. 14 to 19, a beam having a central wavelength is collected onto an inflection point between a convex mirror surface and a concave mirror surface.

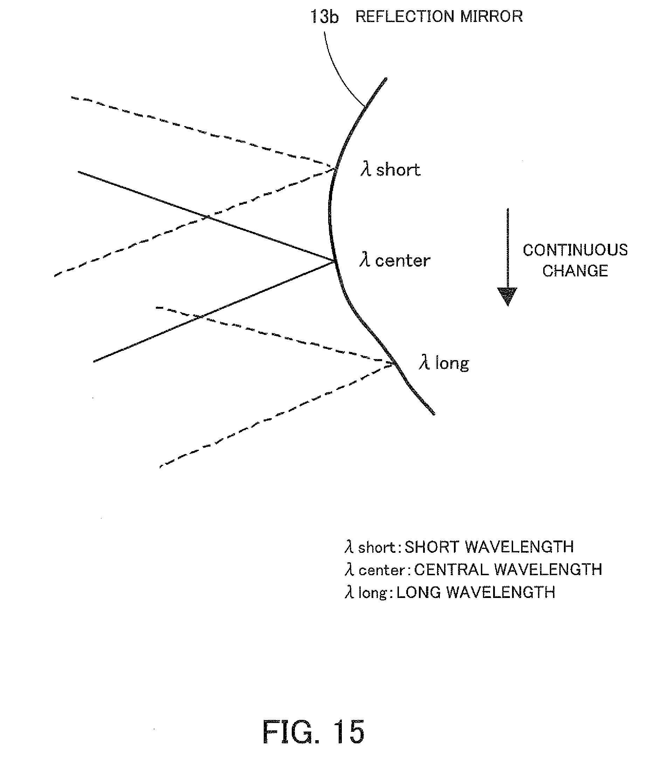

A reflection mirror 13b illustrated in FIG. 15 is formed to have a mirror surface that continuously changes from a strongly convex surface to a weakly convex surface in accordance with change in wavelength of the outgoing light from short to long. Thus, the reflection mirror 13 may have an entire mirror surface thereof formed to have a convex shape as mentioned above such that the mirror surface change from the strongly convex surface to the weakly convex surface as the wavelength changes from short to long, without being formed to have both a convex surface and a concave surface.

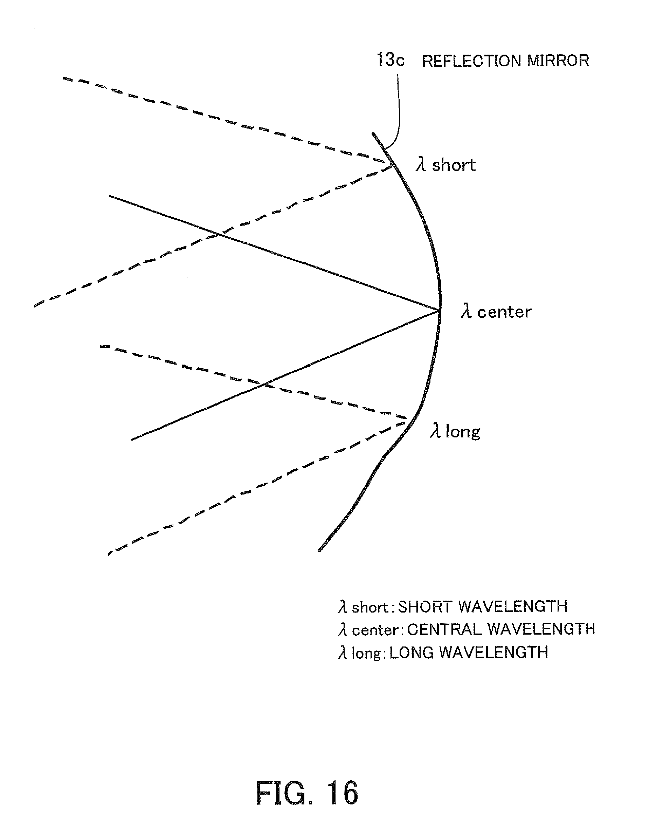

Further, a reflection mirror 13c illustrated in FIG. 16 is formed to have a mirror surface that continuously changes from a weakly concave surface to a strongly concave surface in accordance with change in wavelength of the outgoing light from short to long. In short, the reflection mirror 13 may have an entire mirror surface thereof formed to have a concave shape as mentioned above such that the mirror surfaces changes from the weakly concave surface to the strongly concave surface as the wavelength changes from short to long, without being formed to have both a convex surface and a concave surface.

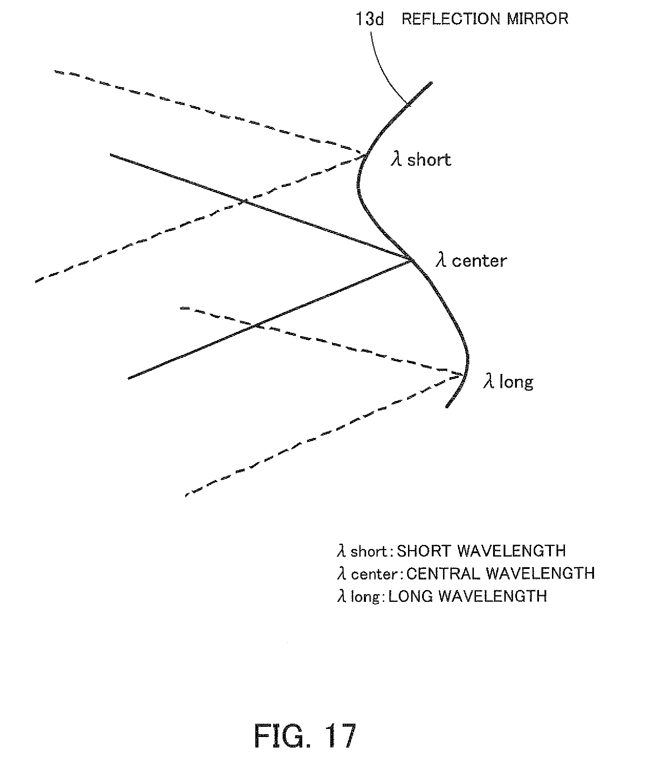

On the other hand, a reflection mirror 13d illustrated in FIG. 17 is formed to have a convex surface and a concave surface. Outgoing light beams having respective shorter wavelengths than a central wavelength is reflected on the convex surface portion, and outgoing light beams having respective longer wavelengths than the central wavelength are reflected on the concave surface portion.

Further, a reflection mirror 13e illustrated in FIG. 18 is formed to have a mirror surface that continuously changes from a flat surface portion to a concave surface portion as wavelength exceeding a central wavelength becomes longer. Outgoing light beams having respective shorter wavelengths than the central wavelength are reflected on the flat surface portion, and outgoing light beams having respective longer wavelengths than the central wavelength are reflected on the concave surface portion.

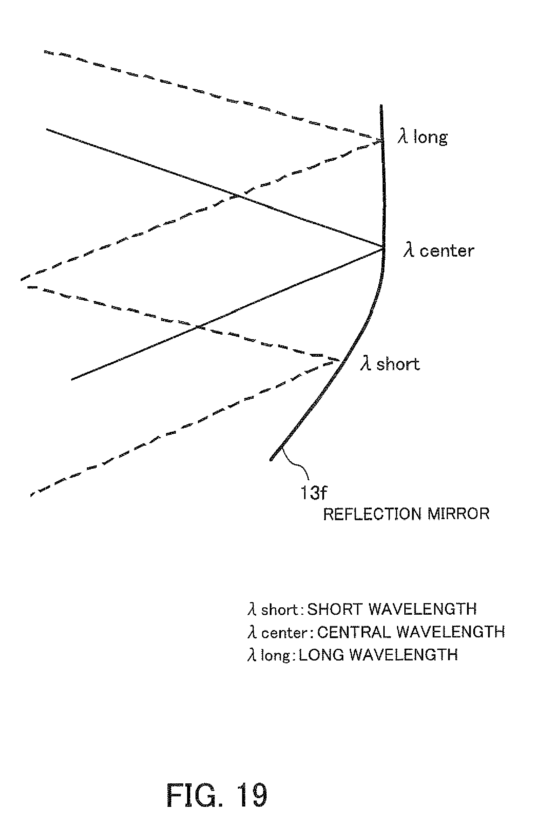

A reflection mirror 13f illustrated in FIG. 19 is formed to have a mirror surface that continuously changes from a convex surface portion to a flat surface portion as wavelength exceeding a central wavelength becomes longer. Outgoing light beams having respective shorter wavelengths than the central wavelength are reflected on the convex surface portion, and outgoing light beams having respective longer wavelengths than the central wavelength are reflected on the flat surface portion.

As described above, by depositing a high-reflection film having a higher reflectivity on a portion of the transmissive surface from which outgoing light having a higher light intensity is emitted, and a low-reflection film having a lower reflectivity on a portion of the transmissive surface from which outgoing light having a lower light intensity is emitted, it is possible to increase combining portions of the outgoing light from the VIPA plate and return light returning to the VIPA plate, to thereby suppress excessive loss.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present invention have been described in detail, it should be understood that various changes, substitutions, and alterations could be made hereto without departing from the scope of the invention.

## Claims

1. An optical module for performing wavelength division, comprising:
a lens which collects input light to generate a collected beam;
an optical component which includes a reflective surface for highly reflecting light and a transmissive surface on which a reflection film having a lower reflectivity than said reflective surface is deposited, causes multiple reflection of the input collected beam in an internal area between said reflective surface and said transmissive surface, and emits diffracted light via said transmissive surface; and
a reflection mirror adapted to reflect outgoing light emitted from said transmissive surface to generate return light and cause the generated return light to return to said transmissive surface,
wherein said reflection film includes a high-reflection film having a higher reflectivity and a low-reflection film having a lower reflectivity, and
wherein said high-reflection film is deposited on a portion of said transmissive surface, from which the outgoing light having a higher light intensity is emitted, and said low-reflection film is deposited on a portion of said transmissive surface, from which the outgoing light having a lower light intensity is emitted, so as to increase combining portions of the outgoing light and the return light.

2. The optical module according to claim 1, wherein the outgoing light has an amplitude distribution of an attenuation curve type in which a beam of outgoing light emitted first from said transmissive surface has a highest light intensity, and the light intensity of the outgoing light is progressively reduced as the outgoing light repeatedly undergoes multiple reflection, and
wherein said high-reflection film having the higher reflectivity is deposited on said transmissive surface to make attenuation of the outgoing light gentle, and said low-reflection film having the lower reflectivity is deposited on said transmissive surface to cause discharge of all light remaining unemitted due to said high-reflection film.

3. The optical module according to claim 1 or 2, wherein said high-reflection film has a higher reflectivity of 98% to 99%, and said low-reflection film has a lower reflectivity of 90% to 95%.

4. A dispersion compensator for compensating for light wavelength dispersion, comprising:
a light input-and-output processing section which separates between an optical path of input light input thereto and an optical path of output light processed therein;
an optical component including a reflective surface for highly reflecting light and a transmissive surface on which a reflection film having a lower reflectivity than said reflective surface is deposited, and having a window formed in said reflective surface for inputting and outputting light;
a movable reflection mirror which reflects outgoing light emitted from said transmissive surface to generate return light and causes the generated return light to return to a predetermined portion of said transmissive surface;
an upstream lens which is disposed between said light input-and-output processing section and said optical component, and collects the input light to generate a collected beam; and
a downstream lens which is disposed between said optical component and said reflection mirror, and collects the outgoing light onto said reflection mirror,
wherein said optical component causes multiple reflection of the collected beam incident on the window within an internal area between said reflective surface and said transmissive surface to emit diffracted light via said transmissive surface, and causes multiple reflection of the return light reaching said transmissive surface within the internal area to emit dispersion-compensated light from said window as the output light,
wherein said reflection film includes a high-reflection film having a higher reflectivity, and a low-reflection film having a lower reflectivity, and
wherein said high-reflection film is deposited on a portion of said transmissive surface, from which the outgoing light having a higher light intensity is emitted, and said low-reflection film is deposited on a portion of said transmissive surface, from which the outgoing light having a lower light intensity is emitted, so as to increase combining portions of the outgoing light and the return light.

5. The dispersion compensator according to claim 4, wherein the outgoing light has an amplitude distribution of an attenuation curve type in which a beam of outgoing light emitted first from said transmissive surface has a highest light intensity, and the light intensity of the outgoing light is progressively reduced as the outgoing light repeatedly undergoes multiple reflection, and
wherein said high-reflection film having the higher reflectivity is deposited on said transmissive surface to thereby make attenuation of the outgoing light gentle, and said low-reflection film having the lower reflectivity is deposited on said transmissive surface to thereby cause discharge of all light remaining unemitted due to said high-reflection film.

6. The dispersion compensator according to claim 4 or 5, wherein said high-reflection film has a higher reflectivity of 98% to 99%, and said low-reflection film has a lower reflectivity of 90% to 95%.

7. The dispersion compensator according to any of claims 4 to 6, wherein said light input-and-output processing section includes a circulator having three ports, and
wherein the input light is input to a first port and is output from a second port to travel toward said upstream lens, and the output light output from said optical component is input to the second port and is output from a third port, whereby the optical paths are separated.

8. The dispersion compensator according to any of claims 4 to 7, wherein said light input-and-output processing section includes an input-side optical fiber for transmitting the input light, an input-side lens disposed between said input-side optical fiber and said upstream lens, an output-side optical fiber for transmitting the output light having returned from said optical component, and an output-side lens disposed between said output-side optical fiber and said upstream lens, and
wherein said input-side lens directs the input light output from said input-side optical fiber toward said optical component, and said output-side lens directs the output light toward said output-side optical fiber, whereby the optical paths are separated.

9. The dispersion compensator according to any of claims 4 to 8, wherein said light input-and-output processing section includes an input-side optical fiber for transmitting the input light, an output-side optical fiber for transmitting the output light having returned from said optical component, and a common lens disposed between said input-side optical fiber and said output-side optical fiber, and said upstream lens, and
wherein said common lens directs the input light output from said input-side optical fiber toward said optical component, and directs the output light having returned from said optical component toward said output-side optical fiber, whereby the optical paths are separated.

10. The dispersion compensator according to any of claims 4 to 9, wherein said reflection mirror is formed to have a mirror surface that continuously changes from a convex surface to a concave surface in accordance with change in wavelength of the outgoing light from short to long.

11. The dispersion compensator according to any of claims 4 to 10, wherein said reflection mirror is formed to have a mirror surface that continuously changes from a strongly convex surface to a weakly convex surface in accordance with change in wavelength of the outgoing light from short to long.

12. The dispersion compensator according to any of claims 4 to 11, wherein said reflection mirror is formed to have a mirror surface that continuously changes from a weakly concave surface to a strongly concave surface in accordance with change in wavelength of the outgoing light from short to long.

13. The dispersion compensator according to any of claims 4 to 12, wherein said reflection mirror has a concave surface portion and a convex surface portion, and
wherein the outgoing light having a shorter wavelength than a central wavelength is reflected on the convex surface portion, and the outgoing light having a longer wavelength than the central wavelength is reflected on the concave surface portion.

14. The dispersion compensator according to any of claims 4 to 13, wherein said reflection mirror is formed to have a mirror surface that continuously changes from a flat surface portion to a concave surface portion as wavelength of the outgoing light exceeding a central wavelength becomes longer, and
wherein the outgoing light having a shorter wavelength than the central wavelength is incident on the flat surface portion, and the outgoing light having a longer wavelength than the central wavelength is incident on the concave surface portion.

15. The dispersion compensator according to any of claims 4 to 14, wherein said reflection mirror is formed to have a mirror surface that continuously changes from a convex surface portion to a flat surface portion as wavelength of the outgoing light exceeding a central wavelength becomes longer, and
wherein the outgoing light having a shorter wavelength than the central wavelength is incident on the convex surface portion, and the outgoing light having a longer wavelength than the central wavelength is incident on the flat surface portion.

16. An optical component for performing wavelength division, comprising:
a reflective surface which highly reflects light;
a transmissive surface on which a reflection film having a lower reflectivity than said reflective surface is deposited; and
a window which is formed in said reflective surface for inputting and outputting light,
wherein said optical component causes multiple reflection of a collected beam entering from said window, within an internal area between said reflective surface and said transmissive surface, and emission of diffracted light via said transmissive surface,
wherein said reflection film includes a high-reflection film having a higher reflectivity and a low-reflection film having a lower reflectivity, and
wherein said high-reflection film is deposited on a portion of said transmissive surface, from which outgoing light having a higher light intensity is emitted, and said low-reflection film is deposited on a portion of said transmissive surface, from which outgoing light having a lower light intensity is emitted, so as to increase combining portions of the outgoing light and return light, when the outgoing light emitted from said transmissive surface is reflected and returns to said transmissive surface as the return light.

17. The optical component according to claim 16, wherein the outgoing light has an amplitude distribution of an attenuation curve type in which a beam of outgoing light emitted first from said transmissive surface has a highest light intensity, and the light intensity of the outgoing light is progressively reduced as the outgoing light repeatedly undergoes multiple reflection, and
wherein said high-reflection film having the higher reflectivity is deposited on said transmissive surface to thereby make attenuation of the outgoing light gentle, and said low-reflection film having the lower reflectivity is deposited on said transmissive surface to thereby cause discharge of all light remaining unemitted due to said high-reflection film.

18. The optical component according to claim 16 or 17, wherein said high-reflection film has a higher reflectivity of 98% to 99%, and said low-reflection film has a lower reflectivity of 90% to 95%.
